# EUROPEAN PATENT SPECIFICATION

(11) **EP 1 651 707 B1**
(45) Date of publication and mention of the grant of the patent: **18.01.2017**
(21) Application number: 04766181.4
(22) Date of filing: 09.07.2004
(51) Int. Cl.: C08J 3/20, C08L 21/00, C08K 5/54, C08K 3/36

(54) **METHOD OF PREPARING SILICA-CONTAINING CURABLE RUBBER MIXES**
VERFAHREN ZUR HERSTELLUNG VON SILICIUMOXIDHALTIGEN HÄRTBAREN KAUTSCHUKMISCHUNGEN
PROCEDE DE PREPARATION DE MELANGES DE CAOUTCHOUC POUVANT ETRE DURCIS CONTENANT DE LA SILICE

(30) Priority: 09.07.2003 IT TO20030527
(43) Date of publication of application: 03.05.2006
(73) Proprietor: Bridgestone Corporation, Tokyo 104-8340 (JP)
(72) Inventor: PONTECORVO, Mauro, I-00052 CERVETERI (IT)
(74) Representative: Marchetti, Alessio
(86) International application number: PCT/EP2004/051445
(87) International publication number: WO 2005/005523

(56) References cited:
- EP-A- 0 732 362
- EP-A- 0 960 890
- EP-A- 1 167 426
- GB-A- 1 424 503
- US-A- 4 059 558
- PATENT ABSTRACTS OF JAPAN vol. 1997, no. 10, 31 October 1997 (1997-10-31) & JP 9 157441 A (BRIDGESTONE CORP), 17 June 1997 (1997-06-17) cited in the application
- ANSARIFAR, MA; JAIN, A: "Optimising silanes in silica-filled rubber products", RUBBER TECHNOLOGY INTERNATIONAL, 1999, pages 34-37,
- GOERL U ET AL: "INVESTIGATIONS INTO THE SILICA/SILANE REACTION SYSTEM", RUBBER CHEMISTRY AND TECHNOLOGY, AMERICAN CHEMICAL SOCIETY, RUBBER DIVISION, US, vol. 70, no. 4, 1 September 1997 (1997-09-01), pages 608-623, XP000750538, ISSN: 0035-9475

## Description

### TECHNICAL FIELD

The present invention relates to a method of preparing silica-containing curable rubber mixes for producing a tread.

Here and hereinafter:
- the term "silica" is intended to mean a reinforcing agent with a base of silicon dioxide, silicates, and mixtures thereof;
- the term "silica-containing mix" is intended to mean a mix containing reinforcing agents definitely comprising silica, but which may also comprise, among other things, carbon black.

### BACKGROUND ART

To improve tyre rolling resistance and wet road-holding performance, tyre tread mixes are known to contain reinforcing fillers in which carbon black is replaced partly or totally by silica.

Curable rubber mixes containing silica require a silane bonding agent to ensure correct silica dispersion in the polymer base, and to improve component bonding.

The surface silane groups on the silica, in fact, promote the formation of hydrogen bonds and, therefore, of silica particle clusters, and impart hydrophilic characteristics to the silica, which are incompatible with the hydrophobic characteristics of the polymer base.

Silane bonding agents interact with silica by bonding with the silane groups, and, at the same time, permit chemical bonding of silica and the polymer base.

The silica normally used as a reinforcing filler in curable rubber mixes comprises about 5-7% by weight of water.

Mix preparation is generally thought to benefit from silica with a significant (over 5% by weight) water content. Water, in fact, is generally thought to promote the silica-silane bonding agent reaction (RUBBER CHEMISTRY AND TECHNOLOGY, VOL. 70, Pages 608-623) by improving its reaction kinetics, and to delay the curing reaction (RUBBER TECHNOLOGY INTERNATIONAL '99, Pages 34-37) to give higher MOONEY Scorch values.

Another important point to note is that, being obtained by precipitation, the silica used in the rubber industry incorporates anyway a certain amount of water, and is therefore conveniently marketed as such by suppliers.

Despite extensive research over the past few years into improving the use of silica in the preparation of curable rubber mixes, silica-containing mixes still have drawbacks - excessively long mixing time and relatively low MOONEY Scorch values - which result in excessively long processing time in relation to production requirements and the number of production cycles performed by one production unit.

Another drawback of using silica as a reinforcing filler is the production of ethanol as a by-product of the silica-silane bonding agent reaction. Ethanol and water, on evaporation, are responsible for the formation of porous zones, which seriously impair the dimensional stability of semifinished parts, particularly treads, which must therefore be drawn at low speed to ensure conformance with product specifications.

The above drawbacks are further compounded in the case of mixes with a high silica content, such as those for producing passenger car tyre treads.

A need was therefore felt for a method of preparing silica-containing curable rubber mixes, which, as compared with known methods, provides for faster mixing, a substantial reduction in porosity, and higher MOONEY Scorch values.

The Applicant has observed that preparing silica-containing curable rubber mixes using silica with a particular water content surprisingly provides for meeting the above requirement.

### DISCLOSURE OF INVENTION

According to the present invention, there is provided a method of preparing silica-containing curable rubber mixes for producing treads, the method comprising at least one mixing step, wherein at least a crosslinkable unsaturated-chain polymer base, a silica-base reinforcing filler, and a silane bonding agent are loaded simultaneously into a mixer and mixed together; the method being characterized in that the silica comprises a quantity of water of at most 3% by weight.

Preferably, the silica comprises a quantity of water of at most 1% by weight.

Preferably, the silica is dehydrated by heat treatment at a temperature ranging between 70 and 130°C.

### BEST MODE FOR CARRYING OUT THE INVENTION

The following is a purely non-limiting example to illustrate and enable a clear understanding of the invention.

### EXAMPLE

The following relates to the preparation, using known methods, of three mixes (A, B, C) of the same composition, except for the type of silica used. Mix A is prepared using dehydrated silica (0% by weight of water), mix B using silica comprising 7% by weight of water, and mix C using silica comprising 17% by weight of water.

More specifically, mix A is produced in accordance with the present invention; mix B is produced in accordance with the known art, and constitutes a control mix; and mix C also constitutes a control mix, and is produced using particularly hydrated silica to determine the observed-parameter pattern as a function of the silica water content.

The silica is dehydrated by subjecting it to a temperature of 120°C for 24 hours. It is important to stress that, within the more general scope of the present invention, the method by which the silica is dehydrated in no way constitutes a limitation of the invention.

In this connection, an existing patent n. JP9157441 taken out by the present Applicant describes heat treatment of silica at a temperature ranging between 180 and 1000°C. The purpose of this treatment is to alter the silica structurally, to bring about a drastic reduction in silica cavity size and obtain advantages in terms of improved wear resistance and wet road-holding performance. Nowhere in the above patent is any reference made to silica dehydration or to the advantages which may be derived from it.

The characteristics of the ingredients used are as follows:
**SBR** = butadiene-styrene copolymer in solution or emulsion, and containing 10 to 60% styrene;
**Silica** = ULTRASIL VN3 (Degussa) type;
**Silane bonding agent** = Si 75 (Degussa) type;
**Stearic acid** = INDUSTRENE R (WITCO) type:
   **Zinc oxide** = OSSIDO DI ZINCO SIGILLO VERDE (ZINOX SRL) type;
   **Antioxidant** = SANTOFLEX 6PPD (FLEXIS) type;
   **Wax** = ANTIOZONANT WAX 6065 (SCHUMAN SASOL GmbH & CO KG) type;
   **Sulphur** = GROUND SULPHUR (SOLVAY BARIUM STRONZIUM GmbH) type;
   **Curing accelerating agent** = TBBS, MBTS and DPG in appropriate proportions.

Mixes A, B and C are prepared using the known method described below.

### - first mixing step -

A 1.6-litre POMINI FARREL closed-rotor mixer (Banbury) is loaded with 100 parts SBR (here and hereinafter, "parts" refer to "parts by weight"), 60 parts silica, 7 parts silane bonding agent, 1 part wax, 1 part antioxidant, 1 part stearic acid, and 2 parts zinc oxide, and is operated at 100 rpm speed up to a temperature of 155°C.

### - second mixing step -

The mix from the first mixing step is cooled, 16 parts silica are added, and the mixer is operated at 100 rpm speed up to a temperature of 155°C.

### - third mixing step -

The mix from the second mixing step is cooled and undergoes another mixing step with no other ingredients added. The mixer is operated at 70 rpm speed up to a temperature of 150°C.

### - fourth mixing step -

The mix from the third mixing step is cooled, and 4 parts of curing agents comprising sulphur and curing accelerating agents are added. The mixer is operated at 40 rpm speed up to a temperature of 110°C.

Samples of each of the mixes obtained as described above were taken and subjected to a series of tests to determine, for each mix, the values of various particularly significant parameters.

Parameters considered:
- viscosity (ML1'+4' at 130°C) and 130°C Mooney Scorch expressed in minutes, measured as per ASTM standard D1646;
- physical property data (ultimate elongation, ultimate stress, M300% modulus values), measured as per ASTM standard D412C;
- Tan D, the ratio between the viscous component of the dynamic modulus [E"(MPa)] and the elastic component of the dynamic modulus [E'(MPa)], measured as per ASTM standard D5992;
- SHORE A hardness;
- porosity values obtained by heat treating the mix samples at 120°C for 20 minutes, and recording the % difference in weight of the sample before and after heat treatment;
- dispersion values obtained using a "DISPERGRADER 1000" and expressed in instrument units of measurement.

Table I shows the values of the parameters considered, together with the various mixing step times.

**Table I**

| MIX | A | B | C |
|---|---|---|---|
| First mixing step time (s) | 208 | 264 | NR |
| Second mixing step time (s) | 87 | 110 | 210 |
| Mooney Scorch (mins) | 17.54 | 16.39 | 11.4 |
| Mooney Scorch (mins) | 67 | 65 | 62 |
| Ultimate elongation (Mpa)* | 473 | 445 | 463 |
| Ultimate stress (Mpa)* | 21.3 | 19.4 | 20.4 |
| 300% modulus (Mpa)* | 12.05 | 11.81 | 11.65 |
| Ultimate elongation (Mpa)** | 439 | 411 | 441 |
| Ultimate stress (Mpa)** | 21 | 19 | 21 |
| 300% modulus (Mpa)** | 13.63 | 13.52 | 13.23 |
| Hardness | 74 | 73 | 71 |
| Porosity (%) | 0.07 | 0.08 | 0.10 |
| Dispersion | 6.6 | 5.5 | 4.7 |
| Tg 60°C | 0.184 | 0.188 | 0.184 |

| | | | |
|---|---|---|---|
| NR = 155°C not reached after 270 s; * non-aged mix; ** aged mix. | | | |

As shown in Table I, compared with the control mixes, mix A produced using the method according to the invention has much faster mixing times, a higher Mooney Scorch value, and a much lower porosity value. The faster mixing times are due to the required temperatures being reached more rapidly, and provide for saving both time and energy, by reducing the operating time of the rotor.

More specifically, as shown by the parameters in Table I, the faster mixing times of mix A have no negative effect on either the physical characteristics of the final mix or on silica dispersion.

As shown by the porosity data, whereas the weight loss of mix A is due to the ethanol formed in the silica-silane bonding agent reaction, the weight loss of mixes B and C is also due to the water loss of the mix, which shows the importance of water in the final porosity of the mix.

High Mooney Scorch and low porosity values enable faster extrusion of the mix, thus further increasing output, over and above the increase provided by reducing mixing time.

It is also interesting to note how, contrary to what is generally believed, an increase in the water content of silica has a negative effect on both the mixing time and Mooney Scorch value of the resulting mix.

Finally, it is safe to say that, when preparing a mix using dehydrated silica, a smaller amount of silane bonding agent can be used as compared with that required for 7% by weight hydrated silica, thus enabling considerable saving, given the high cost of silane bonding agents.

## Claims

1. A method of preparing silica-containing curable rubber mixes for producing treads, the method comprising at least one mixing step, wherein at least a crosslinkable unsaturated-chain polymer base, a silica-base reinforcing filler, and a silane bonding agent are loaded simultaneously into a mixer and mixed together; the method being **characterized in that** the silica comprises a quantity of water of at most 3% by weight; said silica not being subjected to a temperature of 180°C or over.

2. A method as claimed in Claim 1, wherein said silica comprises a quantity of water of at most 1% by weight.

3. A method as claimed in Claim 1 or 2, and comprising a preliminary silica dehydration step.

4. A method as claimed in Claim 3, wherein the silica is subjected, during said dehydration step, to a temperature of 70 to 130°C.

## Patentansprüche

1. Verfahren zum Zubereiten von kieselerdehaltigen vulkanisierbaren Gummimischungen zum Herstellen von Laufflächen, wobei das Verfahren mindestens einen Mischungsschritt umfasst, wobei mindestens eine vernetzbare, kettenungesättigte Polymerbasis, ein kieselerdebasierter verstärkender Füllstoff und ein Silanhaftungsmittel gleichzeitig in einen Mischer geladen und zusammengemischt werden; wobei das Verfahren **dadurch gekennzeichnet ist, dass** die Kieselerde eine Menge Wasser von höchstens 3 Gewichts-% umfasst; wobei die Kieselerde keiner Temperatur von 180 °C oder darüber ausgesetzt wird.

2. Verfahren nach Anspruch 1, wobei die Kieselerde eine Menge Wasser von höchstens 1 Gewichts-% umfasst.

3. Verfahren nach Anspruch 1 oder 2 und umfassend einen vorläufigen Kieselerdeentwässerungsschritt.

4. Verfahren nach Anspruch 3, wobei die Kieselerde während des Entwässerungsschritts einer Temperatur von 70 bis 130 °C ausgesetzt wird.

## Revendications

1. Procédé de préparation de mélanges caoutchouteux durcissables contenant de la silice pour produire des bandes de roulement, le procédé comprenant au moins une étape de mélange, dans lequel au moins une base polymère réticulable à chaîne insaturée, une charge de renforcement à base de silice et un agent de liaison silane sont mis simultanément dans un mélangeur et mélangés les uns avec les autres ; le procédé étant **caractérisé en ce que** la silice comprend une quantité d'eau d'au plus 3 % en poids ; ladite silice n'étant pas soumise à une température de 180 °C ou supérieure.

2. Procédé selon la revendication 1, dans lequel ladite silice comprend une quantité d'eau d'au plus 1 % en poids.

3. Procédé selon la revendication 1 ou 2, et comprenant une étape préliminaire de déshydratation de la silice.

4. Procédé selon la revendication 3, dans lequel la silice est soumise, pendant ladite étape de déshydratation, à une température de 70 à 130 °C.
